# EUROPÄISCHE PATENTSCHRIFT

(11) **EP 1 975 848 B1**
(45) Veröffentlichungstag und Bekanntmachung des Hinweises auf die Patenterteilung: **16.04.2014**
(21) Anmeldenummer: 08002297.3
(22) Anmeldetag: 07.02.2008
(51) Int. Cl.: G06K 7/00, H01R 13/02, H04B 1/38

(54) **Kartenleser für unterschiedliche Speicherkarten**
Card reader for different storage cards
Lecteur de carte pour diverses cartes mémoires

(30) Priorität: 30.03.2007 DE 102007015512
(43) Veröffentlichungstag der Anmeldung: 01.10.2008
(73) Patentinhaber: Amphenol-Tuchel Electronics GmbH, 74080 Heilbronn (DE)
(72) Erfinder: Göbel, Marco, 74613 Öhringen (DE); Poguntke, Matthias, 74080 Heilbronn (DE); Braun, Gerhard, 74626 Zitzfeld (DE)
(74) Vertreter: Wendels, Stefan

(56) Entgegenhaltungen:
- WO-A-2008/064913
- WO-A2-2007/146169
- DE-A1- 10 060 650
- DE-A1- 10 118 972
- DE-A1- 19 734 424
- US-A- 5 933 328
- US-B1- 6 496 381
- US-B1- 6 612 498

## Beschreibung

Die Erfindung bezieht sich auf einen Kartenleser für unterschiedliche Chip- oder Speicherkarten, in den unterschiedliche Chip- oder Speicherkarten eingesetzt werden können.

Es sind bereits Kartenleser für zwei unterschiedliche Karten oder Kartentypen bekannt. Beispielsweise werden zwei unterschiedliche Einführschächte für die unterschiedlichen Kartentypen verwendet oder aber zwei Deckel dienen zur Aufnahme der Karten zweier unterschiedlicher Kartentypen.

Die WO 2007/146169 A2, gegen die Anspruch 1 abgegrenzt wurde, offenbart einen Kartenleser zur Kontaktierung von Karten mit unterschiedlichen Abmessungen. Unter anderem können MMC-, SD-, micro-SD- und Trans Flash-Karten gelesen werden.

Die DE 101 18 972 A1 beschreibt einen SIM-Kartenleser, wobei die Karte in einen Deckel eingelegt wird. Der Deckel wird durch ein Verschwenken und anschließendes Verschieben in seine Verriegelungsstellung gebraucht, in der die Karte gelesen werden kann.

Der Leser aus der US 5,933,328 erlaubt das gleichzeitige Lesen einer SIM-Karte und einer MMC-Karte.

Kartenleser sind auch in DE 100 60 650, in US 6,496,381 B1 und in DE 197 34 424 offenbart.

Die vorliegende Erfindung hat sich zum Ziel gesetzt, den Aufbau eines Kartenlesers der für zwei (bzw. drei) Kartentypen verwendbar ist, drastisch zu vereinfachen und gleichzeitig eine hohe Betriebssicherheit zu gewährleisten. Insbesondere sieht die Erfindung vor, dass ein sicherer Betrieb des Kartenlesers möglich ist, wobei insbesondere vermieden werden soll, dass ein im Gang befindlicher Lesevorgang von der Karte ungewollt gestört wird.

Die Erfindung ist durch Anspruch 1 definiert.

Kurz gesagt sieht die Erfindung einen Kartenleser für zwei Kartentypen vor, der einen vorzugsweise aus Metall bestehenden Klappschiebedeckel aufweist, in den jeweils eine Karte, ausgewählt aus unterschiedlichen Kartentypen, eingelegt werden kann, d.h. entweder eine Karte des ersten Kartentyps oder eine Karte des zweiten Kartentyps, ohne dabei irgendwelche Änderungen am die jeweilige Karte aufnehmenden Deckel vornehmen zu müssen.

Der erfindungsgemäße Kartenleser ist insbesondere geeignet, um zum einen so genannte Micro-SD-Karten oder Transflash-Karten (erster Kartentyp) und zum anderen MMC-Micro-Karten (zweiter Kartentyp) zu lesen. Die Micro-SD- und Transflash-Karten haben die gleichen Abmessungen und die gleichen Kontaktanordnungen, während die MMC-Micro-Karten zwar die gleiche Höhe, aber ansonsten unterschiedliche Abmessungen und Kontaktanordnungen gegenüber Karten des ersten Kartentyps besitzen.

Bevorzugte Ausgestaltungen der Erfindung ergeben sich aus den abhängigen Ansprüchen.

Weitere Vorteile, Ziele und Einzelheiten der Erfindung ergeben sich aus der Beschreibung eines Ausführungsbeispiels anhand der Zeichnung; in der Zeichnung zeigt:
- Fig. 1: eine perspektivische Draufsicht auf einen erfindungsgemäßen Kartenleser in seiner Öffnungsstellung mit eingesetzter Micro-SD- bzw. Transflash-Karte;
- Fig. 2: eine Seitenansicht des Lesers gemäß Fig. 1;
- Fig. 3: einen Schnitt längs Linie A-A in Fig. 2;
- Fig. 4: den Kartenleser gemäß Fig. 1, mit eingesetzter MMC-Micro-Karte;
- Fig. 5: eine Seitenansicht des in Fig. 4 gezeigten Lesers;
- Fig. 6: eine Draufsicht auf den Leser gemäß Fig. 4 gemäß Schnittlinie B-B in Fig. 5;
- Fig. 7: eine perspektivische Draufsicht auf den Leser gemäß den Figuren 1 und 4, wobei aber keine Karte eingesetzt ist;
- Fig. 8: eine Draufsicht auf den Leser gemäß Fig. 7;
- Fig. 9: einen Schnitt längs Linie C-C in Fig. 8;
- Fig. 10: eine perspektivische Ansicht auf die Unterseite des geschlossenen Lesers, wobei der Deckel zugeklappt und in seine Lesestellung verschoben und dort verrastet ist;
- Fig. 11: eine Draufsicht auf den Leser gemäß Fig. 10 von oben, wobei man erkennt, dass offenbar keine Karte eingelegt ist;
- Fig. 12: einen Schnitt längs Linie D-D in Fig. 11;
- Fig. 13: einen Schnitt längs Linie E-E in Fig. 11; und
- Fig. 14: eine Einzelheit der Fig. 10.

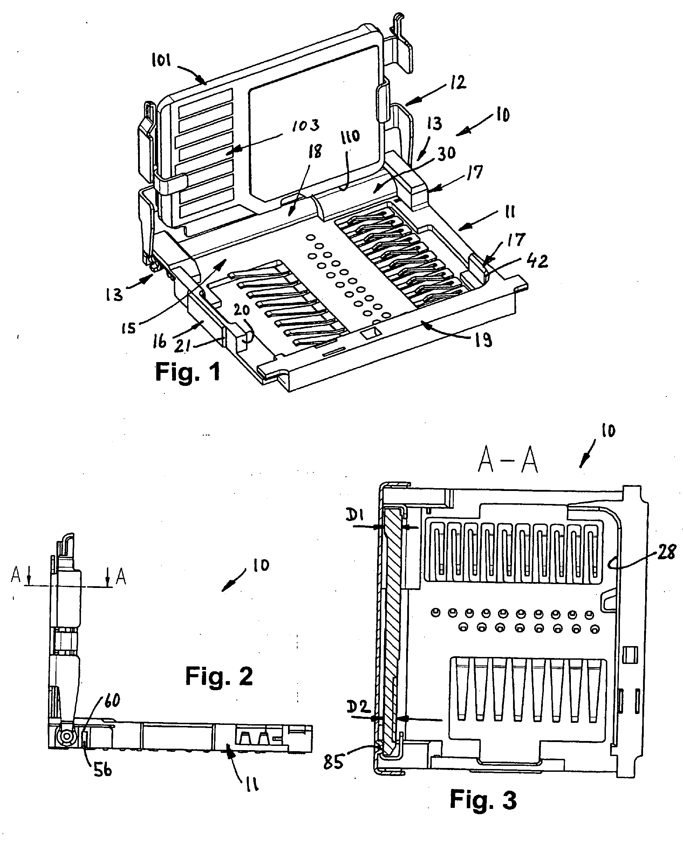

In den Figuren 1 bis 14 ist ein Ausführungsbeispiel eines Kartenlesers 10 (kurz: Leser) gezeigt, der wahlweise Chip- oder Smart-Karten (kurz: Karten) zweier Bauarten verwenden bzw. "lesen" kann. Bei den Kartentypen handelt es sich insbesondere, wie bereits einleitend erwähnt, einmal um Micro-SD-Karten bzw. Transflash-Karten 101 (erster Kartentyp) oder MMC-Micro-Karten 102 (zweiter Kartentyp). Die Micro-SD-Karte und die Transflash-Karte haben den gleichen körperlichen Aufbau, während die MMC-Micro-Karte 102 zwar die gleiche Höhe wie beispielsweise die Micro-SD-Karte 103 besitzt, aber eine geringere Breite als diese. Ferner sind auch die Kontaktanordnungen 103 bzw. 104 unterschiedlich bei den Karten 101 bzw. 102 der beiden Kartentypen angeordnet. Darüber hinaus hat die Micro-SD-Karte 101 und auch die Transflash-Karte 101 an ihrer einen Breitseite eine größere Dicke als an der anderen Breitseite. Demgegenüber ist die Breite der MMC-Micro-Karte 102 konstant.

In der folgenden Beschreibung wird vereinfachend auf eine Karte 101 der ersten Bauart als Micro-SD-Karte 101 hingewiesen, während auf eine Karte 102 der zweiten Bauart mit dem speziellen Kartennamen MMC-Micro-Karte 102 Bezug genommen wird.
Bevor die Erfindung im Einzelnen anhand des Ausführungsbeispiels beschrieben wird, sei folgender Überblick gegeben.

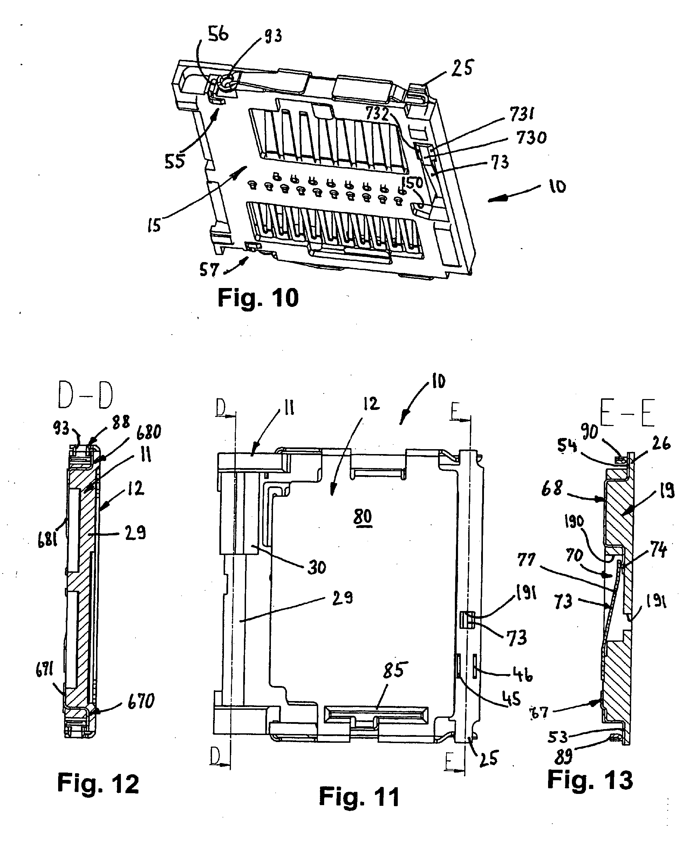

Der Kartenleser 10 weist einen Kontaktträger 11 auf, an dem ein als Klapp/Schiebe-Deckel ausgebildeter Deckel 12 angelenkt ist, um von der in Fig. 1 gezeigten Öffnungsstellung über eine (nicht gezeigte) Schließstellung geklappt und dann in eine Lesestellung gemäß Fig. 10 verschoben zu werden. Anlenkmittel verbinden den Deckel 12 mit dem Kontaktträger 11. Vorzugsweise sind die Anlenkmittel zweiteilig ausgebildet, und zwar ist jeweils eine Gelenkverbindung 13 auf der einen wie der anderen Breitseite des Kartenlesers 10 vorgesehen, wobei nur die linke Gelenkverbindung 13 im Einzelnen beschrieben wird.

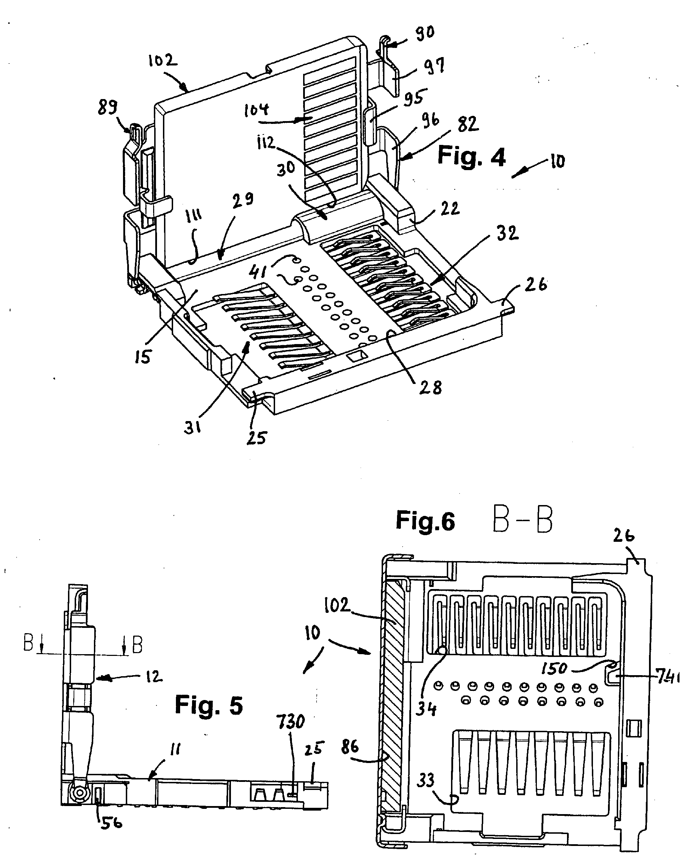

In Fig. 1 ist die Micro-SD-Karte 101 in den Deckel 12 des Kartenlesers 10 eingesetzt und wird in diesem - wie in Fig. 3 gezeigt - gehalten, wobei die Micro-SD-Karte 101 im Öffnungszustand des Deckels 12 jedenfalls mit einem ihrer Unterkantenteil 110 auf einer eine Abrollkurve bildenden ersten Abrollwand 30 aufsitzt. In Fig. 4 ist der gleiche Leser 10 wie in Fig. 1 dargestellt, wobei aber hier eine MMC-Micro-Karte 102 in den Deckel 12 eingesetzt ist und mit einem, längeren, Unterkantenteil 111 auf einer eine zweite Abrollkurve bildenden zweiten Abrollwand 29 sitzt. Ein unterhalb der Kontaktanordnung 104 der Karte 102 gebildeter, etwas "rückversetzter" kürzerer Unterkantenteil 112 liegt nicht auf der Abrollwand 30 auf.

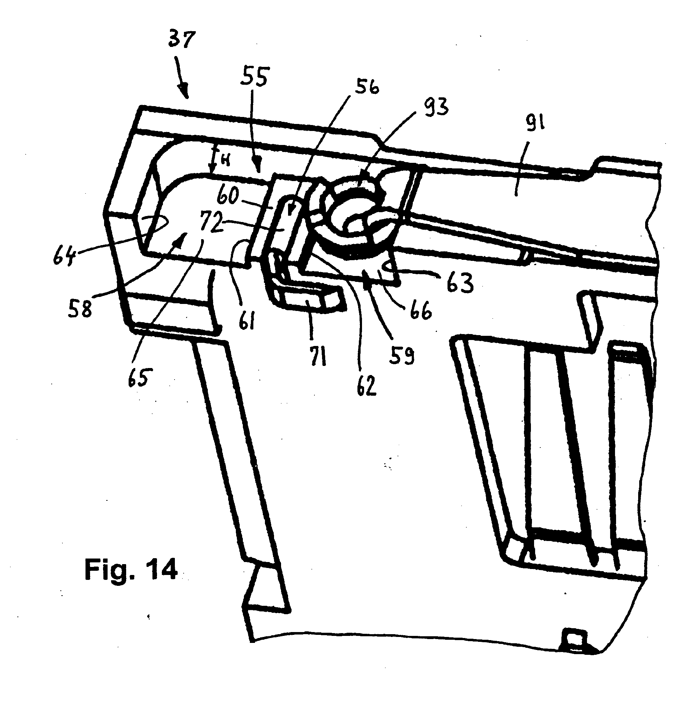

In den Fig. 10 und 14 ist ein weiterer Aspekt der Erfindung gezeigt, der sich auf einen Vorwarnschalter 55 bezieht mittels dessen ein im Gang befindlicher oder beginnender Lesevorgang der Karte 101 oder 102 abgesichert wird.

Schließlich ist insbesondere in Fig. 13 ein Schalter 70 veranschaulicht, der als ein Kartenendlagenschalter 70 bezeichnet werden kann.

### Der Kontaktträger 11

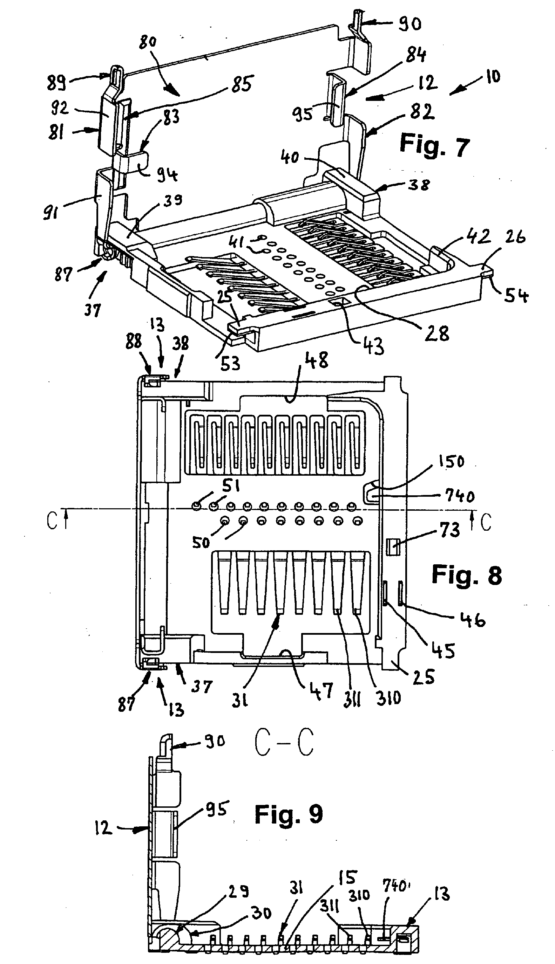

Der Kontaktträger 11 ist vorzugsweise aus Kunststoff hergestellt und besitzt einen Boden bzw. eine Bodenplatte 15 sowie zur Bildung einer Kartenaufnahme eine erste bzw. linke Seitenwand 16, eine zweite bzw. rechte Seitenwand 17, eine Rückwand 18 und eine Vorderwand 19. In der Seitenwand 16 ist ein Ausschnitt 20 vorgesehen. Ferner ist die Seitenwand 16 mit einer Verdickung 21 ausgestattet. Die Seitenwand 17 bildet einen Ausschnitt 22 (Fig. 4). Die Vorderwand 19 bildet beidseitig zum einen einen Wandvorsprung 25, zum anderen einen Wandvorsprung 26. Die Vorderwand 19 weist ferner eine nach innen weisende Anlagefläche 28 auf. Die Rückwand 18 bildet, wie in Fig. 4 gezeigt, die Abrollwand 29 für die MMC-Micro-Karte 102 sowie die nur etwa die halbe Länge der Abrollwand 29 aufweisende Abrollwand 30 für die Micro-SD-Karte 101. Die Abrollwände 29, 30 sind wie in Fig. 9 gezeigt geformt und stellen sicher, dass die jeweilige Karte 101, 102 beim Zuklappen des Deckels 12 geführt wird und dass in der Leseposition die jeweilige Oberkante der Karte 101 bzw. 102 benachbart zur Anlagefläche 28 platziert ist. Der Radius der Abrollwand 29 ist unterschiedlich vom Radius der Abrollwand 30. Die Radien der Abrollwände 29, 30 sind entsprechend den Kartentypen gewählt. Die Kontur der Abrollwände 29, 30 bewirkt eine Relativbewegung der Karte zum Deckel, wenn der Deckel von seiner Öffnungsstellung in seine Schließstellung bewegt wird.

In die Bodenplatte 15 (Fig. 4) ist ein erster Kontaktsatz 31 sowie ein zweiter Kontaktsatz 32 eingesetzt bzw. eingespritzt, wobei entsprechende Kontaktarme über die Bodenplatte 15 hinaus ragen, um in der Leseposition der Karte 101, 102 mit den jeweiligen Kontaktanordnungen 103 bzw. 104 in Berührung zu kommen.

Ausschnitte 33 bzw. 34 (vgl. Fig. 6) für die Kontaktenden der Kontaktelemente der Kontaktsätze 31, 32 sind dabei in der Bodenplatte 15 vorgesehen.

Die beiden Gelenkverbindungen 13 zwischen dem Deckel 12 und dem Kontaktträger 11 weisen jeweils beidseitig angeordnete (Fig. 7 und 8) kontaktträgerseitige Lagermittel 37 und 38 auf, die in von den Seitenwänden 16, 17 gebildeten Lagerblöcken 39, 40 ausgebildet sind. Auf die entsprechenden deckelseitigen Lagermittel 87, 88 (vergleiche Fig. 8 und insbesondere Fig. 14) wird weiter unten eingegangen.

Bevor auf die Ausbildung der kontaktträgerseitigen Lagermittel 37, 38 näher eingegangen wird, sei noch darauf hingewiesen, dass die Bodenplatte 15 Öffnungen 41 (Fig. 7) aufweist, um Zugang zu den Kontaktelementen der Kontaktsätze 31, 32 zu gewähren. Ferner sei bemerkt, dass die zweite oder rechte Seitenwand 17 einen von der Vorderwand nach hinten ragenden Wandteil bzw. Vorsprung 42 aufweist.

Ein Ausschnitt 47 in der linken Seitenwand 16 (unten in Fig. 8) und ein Ausschnitt 48 in der rechten Seitenwand 17 (oben in Fig. 8) ermöglichen beim Schließen des Deckels 12 den Durchtritt einer noch zu beschreibenden ersten Kartenführung bzw. Kartenhalterung 83 und einer noch zu beschreibenden zweiten Kartenführung bzw. Kartenhalterung 84 des Deckels 12.

Schließlich erkennt man in Fig. 8 Kontaktelementanschlusszonen 50 bzw. 51 für die Kontaktelemente der ersten bzw. zweiten Kontaktsätze 31 bzw. 32. Die Kontaktelementanschlusszonen sind zwischen den Kontaktsätzen 31, 32 im Kontaktträger 11 angeordnet.

Der oben erwähnte Kartenendlagenschalter 70 weist (vgl. Fig. 13) zwei Kontaktelemente auf, und zwar ein erstes stationäres Kontaktelement 68 und ein zweites, durch die Anwesenheit der Karte 101, 102 in der Leseposition betätigtes Kontaktelement 73. Der Kontaktpunkt oder die Kontaktstelle zwischen den beiden Kontaktelementen 68 und 73 ist mit 74 bezeichnet.

Das Kontaktelement 73 weist einen schwenkbaren, abgewinkelten Kontaktarm 77 auf und ist vorzugsweise von unten her in die Vorderwand 19 des Lesers 10 eingesetzt und endet mit seinem freien Ende in einer in der Vorderwand 19 ausgebildeten Kammer 190, die eine Öffnung 191 zur Oberseite der Wand 19 hin besitzt. Entgegengesetzt zu seinem freien Ende hat das Kontaktelement 73 - vgl. Fig. 10 - ein Befestigungsende, welches zwei Arme 731, 732 besitzt, die in in Fig. 11 gezeigte Schlitze 46 und 45 in der Vorderwand 19 eingesetzt sind. Zwischen dem Ursprung der Arme 731 und 732 bildet das Kontaktelement 73 eine Kontaktzone 730, mit der das Kontaktelement 73 mit einem auf einer Leiterplatte befindlichen Kontakt oder einer Leiterbahn verbunden sein kann.

Um das in Eingriff kommen einer Karte 101 oder 102 mit dem Kontaktelement 73 in der Lesestellung der Karte 101 oder 102 zu erleichtern, ist der Kontaktarm 73 mit einer beispielsweise in Fig. 9 gezeigten Betätigungszunge 740 versehen, die sich frei in einem Ausschnitt 150 des Bodens 15 des Kontaktträgers 11 bewegen kann, was in insbesondere in Fig. 10 und auch in Fig. 6 zu erkennen ist.

Im Zusammenhang mit den kontaktträgerseitigen Lagermitteln 37 sei anhand der Fig. 14 genauer auf den Vorwarnschalter 55 eingegangen, von dem ein Vorwarnschalterkontakt 56 sowohl in Fig. 10 als auch in Fig. 14 gezeigt ist.

Vorzugsweise ist, wie in Fig. 10 gezeigt, neben dem Vorwarnschalter 55 diametral dazu ein Vorwarnschalter 57 vorgesehen, der aber nicht näher beschrieben wird, da er in gleicher Weise wie der Vorwarnschalter 55 ausgebildet ist. Auch die Beschreibung der kontaktträgerseitigen Lagermittel 37 gilt analog für die kontaktträgerseitigen Lagermittel 38 auf der anderen Seite des Lesers 10.

Die kontaktträgerseitigen Lagermittel 37 - vergleiche Fig. 14 - werden durch eine erste und eine zweite benachbarte, jeweils seitlich nach unten offene Kammer 58 bzw. 59 gebildet, die durch einen seitlich (Fig. 2) vorstehenden Isoliervorsprung (oder lsolierrippe) 60 getrennt sind. Die erste Kammer 58 ist von seitlichen Anschlagwänden 61 bzw. 64 begrenzt, während die zweite Kammer 59 von Anschlagwänden 62 und 63 seitlich begrenzt ist. Die Kammern 58 und 59 sind (in Fig. 14) nach oben hin ebenfalls durch eine Wand begrenzt, die eine Breite H besitzt, die größer ist als die nicht näher bezeichnete Höhe des Isoliervorsprungs bzw. der Isolierrippe 60. Die erste Kammer 58 besitzt einen Kammerboden 65, und die zweite Kammer 59 besitzt einen Kammerboden 66. Auf dem einen oder dem anderen der Kammerböden 65 bzw. 66 sitzt ein noch zu beschreibender, vorzugsweise kugelförmiger Lagernapf (Tiefzieh-Napfscharnier) 93 des Deckels 12 auf.

Der Vorwarnschalterkontakt 56 ist in den Isoliervorsprung 60 eingespritzt oder eingesetzt bzw. eingeklebt. Der Vorwarnschalterkontakt 56 weist eine Kontaktrippe 72 auf, die sich, wie gezeigt, in Längsrichtung des lsoliervorsprungs 60 erstreckt und über die Oberseite des Isoliervorsprungs 60 ragt, um beim Darübergleiten des kugelförmigen Lagernapfs 93 eine Kontaktverbindung herzustellen. Der Vorwarnschalterkontakt 56 weist vorzugsweise einstückig mit seiner Kontaktrippe 72 ausgebildet einen Kontaktfuß 71 auf, der mit einer entsprechenden, eine Kontaktgabe zwischen Lagernapf 93 und Kontaktrippe 72 anzeigenden Schaltung verbunden ist.

### Klapp/Schiebe-Deckel 12

Der Deckel 12 ist, wie erwähnt, als ein Klapp/Schiebe-Deckel ausgebildet und besteht vorzugsweise aus Metall oder metallisiertem Kunststoff. In der Zeichnung ist der Deckel 12 als aus Metall bestehend dargestellt.

Der Deckel 12 weist - vergleiche insbesondere Fig. 7 - eine Metallplatte 80 auf, die eine erste oder linke Seitenwand 81 sowie eine rechte oder zweite Seitenwand 82 besitzt. Der Deckel 12 weist benachbart, zur linken Seitenwand 81 die erste oder linke Kartenführung bzw. Kartenhalterung 83, sowie benachbart zur zweiten oder rechten Seitenwand 82, die zweite Kartenführung bzw. Kartenhalterung 84 auf.

Mit 85 ist ein über die Unterseite 86 der Metallplatte 80 (vergleiche Figuren 6 und 7) hinausragender, an der Metallplatte herausgeprägter Wulst bezeichnet, der die Funktion einer dritten Kartenführung bzw. Kartenhalterung für die MMC-Micro-Karte 102 (vergleiche Fig. 4) zusammen mit der ersten Kartenführung 83 übernimmt und der im Falle einer in den Deckel 12 eingesetzten Micro-SD-Karte 101 (vergleiche Fig. 3) einen Dickenausgleich vorsieht.

Die linke Seitenwand 81 (Fig. 7) ist zweiteilig ausgebildet und besitzt einen Lagerabschnitt oder Anlenkteil 91 und beabstandet davon einen Rastabschnitt oder Rastteil 92, der in einem als Kontakt bzw. Verriegelungsmittel wirkenden Wandvorsprung 89 endet. In dem vom Lagerabschnitt 91 und Rastabschnitt 92 gebildeten Zwischenraum ist die erste Kartenführung 83 in der Form eines Winkellappens 94 in der gezeigten Weise aus dem Metall des Deckels 80 heraus und nach innen gebogen. Der Lagerabschnitt 91 endet in den deckelseitigen Lagermitteln 87, die ihrerseits den bereits erwähnten kugelförmigen Lagernapf 93 aufweisen.

Die zweite oder rechte Seitenwand 82 des Deckels 12 weist (vergleiche Fig. 4) einen Lagerabschnitt bzw. Lagerteil 96 und beabstandet davon einen Rastabschnitt bzw. Rastteil 97 auf, welch letzterer in Kontakt- bzw. Verriegelungsmitteln in der Form eines Kontakt- bzw. Verriegelungsmittel bildenden Wandvorsprungs 90 endet. In dem von dem Lagerteil 96 und Rastteil 97 gebildeten Zwischenraum ist ein Winkellappen 95 aus der Deckelplatte heraus und nach innen gebogen, um die zweite oder rechte Kartenführung 84 zu bilden.

Der erfindungsgemäße Kartenleser 10 ermöglicht den wahlweisen Einsatz einer Micro-SD-Karte 101, wie in Fig. 1 gezeigt, oder aber den Einsatz einer MMC-Micro-Karte 102, wie in Fig. 4 gezeigt.

Bei der Verwendung der Micro-SD-Karte 101 sitzt diese in der in Fig. 1 gezeigten Öffnungsstellung mit ihrer Unterkante 110 auf der durch die Abrollwand 30 gebildeten Abrollkurve, und wird beim Verschwenken des Deckels 80 in den geschlossenen Zustand von der Abrollwand 30 bzw. deren Abrollkurve geführt, so dass die Kontaktanordnung 103 mit dem Kontaktsatz 31 zur Ausrichtung kommt. Die Seitenkanten der Karte 101 sind dabei in der ersten Kartenführung 83 sowie der zweiten Kartenführung 84 geführt und gehaltert, wobei der erwähnte Wulst 85, wie in Fig. 3 gezeigt, zum Dickenausgleich dient, da die Dicke D1 der Micro-SD-Karte 101 größer ist als die Dicke D2 am gegenüberliegenden Ende der Karte 101.

Beim Einsetzen der MMC-Micro-Karte 102 in den Deckel 12, wie dies in Fig. 4 gezeigt ist, sitzt die Unterkante 111 auf der Abrollwand 30, und wird beim Verschwenken des Deckels in die Schließstellung durch die von der Abrollwand 30 gebildete Abrollkurve geführt, um so beim Schließen des Deckels 80, jedenfalls dann, wenn die Lesestellung erreicht ist, den Kontaktsatz 104 mit der Kontaktanordnung 32 auszurichten.

Wie erläutert, ist der Deckel 12 als Klapp/Schiebe-Deckel ausgebildet, d.h. nachdem der Deckel 12 in seine am Kontaktträger 11 anliegende Schließstellung verschwenkt ist, wird der Deckel 12 noch in die, beispielsweise in den Fig. 10 und 11 gezeigte Leseposition verschoben, wobei der kugelförmige Lagernapf 93 (und natürlich auch sein Pendant auf der anderen Seite) von der ersten Kammer 58 über den Isoliervorsprung 60 und die Rippe 72 in die zweite Kammer 59 elastisch springt dank der Federwirkung des Lagerteils 91 (und auch des Lagerteils 96).

Fig. 14 zeigt den Deckel 12 in der Lesestellung. In der Lesestellung sind auch die beiden Wandvorsprünge 89 und 90 unter die entsprechenden Wandvorsprünge 25, 26 der Vorderwand 19 gefahren, und stehen dabei vorzugsweise mit Kontaktflächen 53 bzw. 54, die an den Unterseiten der Wandvorsprünge 25, 26 angeordnet sind, in Kontaktverbindung, so das Erreichen der Lesestellung des Deckels 12 signalisiert werden kann.

Die Kontaktfläche 54 wird durch das Kontaktelement 68, wie in Fig. 13 gezeigt, gebildet, und die Kontaktfläche 53 wird durch ein weiteres im Bereich der Vorderwand 19, und zwar an deren Unterseite, eingesetztes Kontaktelement 67, gebildet. Die Kontaktelemente 67 und 68 enden jeweils in den Kontaktflächen 53 und 54, angebracht unter den Wandvorsprüngen 24, 25. Diese Kontaktflächen 53, 54 kommen bei in Lesestellung befindlichem Deckel 12 mit den Wandvorsprüngen 89 bzw. 90 in Berührung. Die Kontaktelemente 67 und 68 können beispielsweise auf einem bestimmten Potential, insbesondere Erde, liegen, und würden so den Deckel 12 auf Erdpotential legen, wenn sich der Deckel 12 in Lesestellung befindet.

Von besonderer Bedeutung ist dabei der Vorwarnschalter 55, der zum einen bei der Bewegung des Deckels 12 von seiner durch die Kammer 58 definierten Schließposition in die durch die Kammer 59 definierte Leseposition betätigt wird und anzeigt, dass ein Lesevorgang gestattet werden kann. Besonders wichtig ist die Funktion des Vorwarnschalters 55 dann, wenn in der Leseposition der Karte 101, 102 ein Lesevorgang der in der Karte 101, 102 enthaltenen Information, oder ein Speichern von Information in der Karte 101, 102, in Gang ist, und ungewollt ein Verschieben des Deckels 12 in Richtung der durch die erste Kammer 58 definierten Schließposition erfolgt. Hier kann der Vorwarnschalter 55 bei Kontaktgabe zwischen Kontaktrippe 72 und Lagernapf 93 die Beendigung eines Lesevorgangs befehlen, bevor die Kontaktgabe zwischen den im Kontaktträger befindlichen Kontaktelementen (die den Kontaktsatz 31 oder 32 bilden) und der Kontaktanordnung 103, 104 der eingesetzten Karte unterbrochen wird.

Vorzugsweise sind ebenfalls, wie in Fig. 12 gezeigt, Kontaktelemente 670 und 680 im Bereich oder in der Rückwand 29 angeordnet und bilden zum einen an der Unterseite der Rückwand 29 Kontaktarme 671 und 681, die beispielsweise mit Leiterbahnen auf einer gedruckten Schaltungsplatte verbunden sein können. Die anderen Enden der Kontaktelemente 670 und 680 stellen bei geschlossenem Deckel 12 die Verbindung zu dem Deckel 12 her.

## Patentansprüche

1. Kartenleser (10) mit:
a. einem Kontaktträger (11)
- wobei im Kontaktträger (11) ein erster Kontaktsatz (31) zur Kontaktierung einer Micro-SD-Karte (101) vorgesehen ist, und
- daneben ein zweiter Kontaktsatz (32) zur Kontaktierung einer MMC-Micro-Karte (102) vorgesehen ist,
und wobei der erste und zweite Kontaktsatz (31, 32) aus einzelnen, zueinander parallel angeordneten länglichen Kontaktelementen gebildet wird, von denen sich jedes einzelne Kontaktelement seiner Länge nach in eine Elementerichtung erstreckt, und mit
b. einem von einer Öffnungsstellung in eine Schließstellung, um eine Drehachse verschwenkbar angelenkten und in eine Lesestellung verschiebbaren Deckel (12),
c. wobei der Deckel (12) mit nur einer Kartenführung (83, 84) zur Aufnahme entweder der Micro-SD-Karte (101) oder der MMC-Micro-Karte (102) ausgebildet ist, und
d. wobei die Kartenführung (83, 84) so am Deckel (12) angeordnet ist, dass eine Karte (101, 102) an ihren Seitenkanten geführt und gehalten werden kann,
**dadurch gekennzeichnet, dass**
e. die Elementerichtung im Wesentlichen parallel zur Drehachse orientiert ist.

2. Kartenleser nach Anspruch 1, wobei der Deckel (12) ein Metalldeckel mit einer Metallplatte (86) ist und wobei ein an der Unterseite (86) der Metallplatte herausgeprägter Wulst ausgebildet ist.

3. Kartenleser nach Anspruch 1 oder 2, wobei die Kartenführung (83, 84) in der Form von Winkellappen (94, 95) gebildet ist, die aus dem Metallblech der Deckelplatte (80) herausgestanzt und gebogen sind.

4. Kartenleser nach wenigstens einem der Ansprüche 1 bis 3, wobei der Deckel (12) eine erste Seitenwand (81) und eine zweite Seitenwand (82) besitzt.

## Claims

1. Card reader (10) having:
a. a contact support (11),
- wherein the contact support (11) contains a first contact set (31) for making contact with a micro-SD card (101), and
- next to that contains a second contact set (32) for making contact with an MMC micro-card (102),
and wherein the first and second contact sets (31, 32) are formed from single elongate contact elements that are arranged parallel to one another and every single contact element from which extends in an element direction according to its length, and having
b. a cover (12) that can be displaced from an open position into a closed position, is articulated so as to be able to be swivelled about an axis of rotation, and into a read position,
c. wherein the cover (12) is produced with just one card guide (83, 84) for holding either the micro-SD card (101) or the MMC micro-card (102), and
d. wherein the card guide (83, 84) is arranged on the cover (12) such that a card (101, 102) can have its lateral edges guided and held, **characterized in that**
e. the element direction is oriented essentially parallel to the axis of rotation.

2. Card reader according to Claim 1, wherein the cover (12) is a metal cover having a metal plate (86) and wherein a bead embossed on the underside of the metal plate (86) is formed.

3. Card reader according to Claim 1 or 2, wherein the card guide (83, 84) is in the form of angular lobes (94, 95) that are punched out and bent from the sheet metal of the cover plate (80).

4. Card reader according to at least one of Claims 1 to 3, wherein the cover (12) has a first lateral wall (81) and a second lateral wall (82).

## Revendications

1. Lecteur de carte (10) comprenant :
a. un support de contacts (11)
- un premier ensemble de contacts (31) étant prévu dans le support de contacts (11) pour la mise en contact d'une carte micro SD (101) et
- à côté de celui-ci, un deuxième ensemble de contacts (32) étant prévu pour la mise en contact d'une carte MMC micro (102)
- et les premier et deuxième ensembles de contacts (31, 32) étant formés à partir d'éléments de contact allongés individuels disposés parallèlement les uns aux autres, parmi lesquels chaque élément de contact individuel s'étend longitudinalement dans une direction d'élément, et comprenant
b. un couvercle (12) articulé pouvant être pivoté autour d'un axe de rotation d'une position d'ouverture à une position de fermeture et pouvant être coulissé dans une position de lecture,
c. le couvercle (12) étant réalisé de manière à ne présenter qu'un seul guide de carte (83, 84) pour recevoir soit la carte micro SD (101) soit la carte MMC micro (102) et
d. le guide de carte (83, 84) étant disposé sur le couvercle (12) de telle sorte qu'une carte (101, 102) puisse être guidée et retenue au niveau de ses bords latéraux,
**caractérisé en ce que**
e. la direction d'élément est orientée essentiellement parallèlement à l'axe de rotation.

2. Lecteur de carte selon la revendication 1, dans lequel le couvercle (12) est un couvercle métallique pourvu d'une plaque métallique (86) et un bourrelet estampé sur la face inférieure de la plaque métallique (86) est prévu.

3. Lecteur de carte selon la revendication 1 ou 2, dans lequel le guide de carte (83, 84) est formé sous forme de languettes coudées (94, 95) qui sont découpées dans la tôle métallique de la plaque de couvercle (80) et pliées.

4. Lecteur de carte selon au moins l'une quelconque des revendications 1 à 3, dans lequel le couvercle (12) présente une première paroi latérale (81) et une deuxième paroi latérale (82).
